# EUROPÄISCHE PATENTSCHRIFT

(11) **EP 4 178 104 B1**
(45) Veröffentlichungstag und Bekanntmachung des Hinweises auf die Patenterteilung: **08.01.2025**
(21) Anmeldenummer: 21020549.8
(22) Anmeldetag: 04.11.2021
(51) Int. Cl.: H02S 20/25

(54) **SOLARDACHPLATTE**
SOLAR ROOF PANEL
PANNEAU SOLAIRE DE TOIT

(43) Veröffentlichungstag der Anmeldung: 10.05.2023
(73) Patentinhaber: PREFA Aluminiumprodukte GmbH, 3182 Marktl (AT)
(72) Erfinder: Gruber, Felix, 3203 Rabenstein (AT); Stritzl, Sandra, 3163 Rohrbach a.d. Gölsen (AT)
(74) Vertreter: SONN Patentanwälte GmbH & Co KG

(56) Entgegenhaltungen:
- US-A- 6 128 868
- US-A1- 2017 353 144
- US-A1- 2021 211 093

## Beschreibung

Die vorliegende Erfindung betrifft eine Solardachplatte umfassend ein Photovoltaikmodul mit einer Anschlussdose für das Anschließen von elektrischen Leitern an das Photovoltaikmodul und ein plattenartiges Befestigungselement für das Photovoltaikmodul, wobei das Photovoltaikmodul flächig mit einer Vorderseite des Befestigungselements verbunden ist, wobei das Befestigungselement eine der Vorderseite gegenüberliegende Rückseite aufweist und wobei das Befestigungselement an seinen jeweils gegenüberliegenden Rändern durch Falzen aus dem Befestigungselement gebildete Profile aufweist, die komplementäre Verbindungsmittel ausbilden, sodass die Verbindungsmittel nebeneinander angeordneter Solardachplatten formschlüssig miteinander in Eingriff bringbar sind.

Solarzellen eines Photovoltaikmoduls werden über Anschlussdosen z.B. an einen Verbraucher angeschlossen und/oder mit anderen Solarzellen oder weiteren Photovoltaikmodulen verbunden. Die Anschlussdose ist mit von den Solarzellen des Photovoltaikmoduls abgehenden Querverbindern verbunden, über die der Anschluss des Photovoltaikmoduls an elektrische Verbraucher oder an weitere Photovoltaikmodule erfolgt. Zwischen zwei derartigen Querverbindern ist üblicherweise eine Bypass-Diode geschaltet, die dazu dient, einen Ausfall des kompletten Photovoltaikmoduls oder sämtlicher miteinander verbundener Photovoltaikmodule bei einer teilweisen Abschattung des Photovoltaikmoduls bzw. der Photovoltaikmodule oder im Falle eines Schadens zu vermeiden.

Die Verbindung der Querverbinder mit der Anschlussdose erfolgt beispielsweise derart, dass die von den Solarzellen des Photovoltaikmoduls abgehenden Querverbinder in die Anschlussdose hineinragen und dort mit geeigneten Kontaktierungsblechen verbunden sind. Alternativ ist es möglich, die Anschlussdose mit vorstehenden Elektroden auszustatten, welche in das Photovoltaikmodul einlaminiert werden und im Randbereich des Photovoltaikmoduls die Querverbinder kontaktieren.

Die Veröffentlichungen US6128868A, US2017353144A1 sowie US2021211093A1 zeigen Solardachplatten der beschriebenen Art.

Beim Einsatz von Photovoltaikmodulen auf Dächern sind an die Photovoltaikmodule besondere Anforderungen hinsichtlich der windsicheren Befestigung zu stellen. Darüber hinaus stellt es sich die vorliegende Erfindung zur Aufgabe, auch einen gewissen Schlagschutz für die Anschlussdose und die eher empfindlichen Ränder der Photovoltaikmodule zu gewährleisten und Klebstoffmaterialen, mit denen das Photovoltaikmodul an dem Befestigungselement festgelegt ist, im Randbereich des Photovoltaikmoduls vor der UV-Strahlung zu schützen, um auf diese Weise eine erhöhte Lebensdauer der erfindungsgemäßen Solardachplatte zu erreichen. Gleichzeitig soll die Solardachplatte Mittel zur organisierten Führung von Kabeln im Fall der Verwendung einer Vielzahl von erfindungsgemäßen Solardachplatten bereitstellen, sodass ein Dach eines Gebäudes mit den erfindungsgemäßen Solardachplatten mehr oder weniger vollständig bedeckt werden kann, ohne dass Kabel nachträglich aufwendig versorgt werden müssen.

Zur Lösung dieser Aufgaben ist die vorliegende Erfindung nach Anspruch 1 erfindungsgemäß dadurch gekennzeichnet, dass ein erstes Profil der genannten Profile einen die Anschlussdose und/oder eine zwischen Anschlussdosen zweier benachbarter Solardachplatten verlaufende Verbindungsleitung überspannenden Bereich aufweist. Das erste Profil bildet somit nicht nur so wie die anderen Randprofile jeweils ein Verbindungsmittel zur formschlüssigen Verbindung mit einer benachbarten Solardachplatte aus, sondern bildet unter seinem erfindungsgemäß vorgesehenen überspannenden Bereich einen Aufnahmeraum bzw. Aufnahmekanal für die Aufnahme der Anschlussdose und/oder der genannten Verbindungsleitung aus. Der Aufnahmeraum bzw. Aufnahmekanal erstreckt sich hierbei entlang desjenigen Randes des Photovoltaikmoduls, an dem die Anschlussdose angeordnet ist. Der unterhalb des überspannenden Bereichs des ersten Profils ausgebildete Aufnahmeraum bzw. Aufnahmekanal erstreckt sich vorzugsweise über die gesamte Länge desjenigen Randes des Photovoltaikmoduls oder der Solardachplatte, an dem die Anschlussdose angeordnet ist. Die erfindungsgemäße Ausbildung sorgt für einen sicheren Schutz der Anschlussdose und/oder der zwischen benachbarten Anschlussdosen verlaufenden Verbindungsleitung, wobei der überspannende Bereich des ersten Profils bevorzugt eine Auflagefläche für eine benachbarte, den Randbereich der Solardachplatte überlappende, Solardachplatte bildet. Dadurch kommt der überspannende Bereich des ersten Profils sowie die Anschlussdose und/oder die Verbindungsleitung unterhalb eines Randbereichs einer benachbarten Solardachplatte zu liegen, was einen zusätzlichen Schutz bietet.

Wenn die Solardachplatte rechteckig ausgebildet ist und eine Vielzahl von Solardachplatten in im Wesentlichen horizontalen Reihen angeordnet werden, um eine Dachfläche auszubilden, hat jede Solardachplatte einen rechten und einen linken Rand, entlang dessen die Solardachplatte mit benachbarten Solardachplatten derselben Reihe verbunden werden, sowie einen unteren und einen oberen Rand, entlang dessen die Solardachplatte mit Solardachplatten benachbarter Reihen verbunden wird. Die Solardachplatten werden hierbei derart verlegt, dass der obere Rand der Solardachplatten einer Reihe von den Solardachplatten der oberhalb angeordneten Reihe abgedeckt wird, um ein Abfließen von Regenwasser zu ermöglichen. Die Begriffe "oberhalb" und "unterhalb" beziehen sich hierbei auf die Falllinie des schrägen Dachs.

Unter Berücksichtigung der oben getroffenen Definitionen ist das erfindungsgemäß ausgebildete erste Profil vorzugsweise am oberen Rand der Solardachplatte angeordnet.

Erfindungsgemäß umfasst das erste Profil im Anschluss an den überspannenden Bereich einen unter Einhaltung eines Abstands hakenförmig zur Vorderseite zurückgebogenen Endabschnitt. Der hakenförmig zurückgebogene Endabschnitt bildet hierbei im Querschnitt gesehen das freie Ende des ersten Profils, sodass auf Grund des genannten Abstands zwischen dem zurückgebogenen Ende und dem darunterliegenden Abschnitt ein weiterer Kabelkanal ausgebildet wird, in den Verbindungskabel weiterer Solardachplatten eingelegt und damit versorgt werden können. Insbesondere dient der genannte Kabelkanal der Aufnahme wenigstens eines Verbindungskabels, mit dem die in Reihe geschalteten Solardachplatten einer Plattenreihe mit den Solardachplatten der darüber angeordneten Reihe elektrisch verbunden werden.

Eine bevorzugte Weiterbildung sieht in diesem Zusammenhang vor, dass das erste Profil in dem hakenförmig zur Vorderseite zurückgebogenen Bereich eine Mehrzahl von Ausnehmungen zur Ausbildung einer Mehrzahl von freistehenden Zungen aufweist. Da dieser Bereich lediglich der Aufnahme von Kabeln dient, kann hier auf diese Weise Material und somit Gewicht eingespart werden, was die erfindungsgemäße Solardachplatte einfacher in der Handhabung macht.

Hinsichtlich der Ausbildung des Verbindungsmittels ist bevorzugt vorgesehen, dass das erste Profil einen über einen Randbereich des Photovoltaikmoduls gebogenen Abschnitt aufweist, der über dem Randbereich des Photovoltaikmoduls auf sich selbst zurückgebogen ist und danach zum überspannenden Bereich hinreicht. Das plattenartige Befestigungselement ist somit aus der Plattenebene herausgebogen und über den Rand des Photovoltaikmoduls gezogen, sodass es den Rand des Photovoltaikmoduls, insbesondere den oberen Rand des Photovoltaikmoduls, abdeckt. Der Rand des Photovoltaikmoduls wird dadurch vor Hagel und Sonneneinstrahlung geschützt. Gleichzeitig kann ein entsprechend komplementäres Profil einer benachbarten Solardachplatte in diesen dachartigen Bereich eingreifen und auf diese Weise eine formschlüssige Verbindung herstellen. Zu diesem Zweck ist zwischen dem über den Randbereich des Photovoltaikmoduls gebogenen Abschnitt des ersten Profils und dem Photovoltaikmodul bevorzugt ein Abstand vorgesehen, der ein Eingreifen eines komplementären Profils einer benachbarten Platte ermöglicht.

Zur Verbindung einer erfindungsgemäßen Solardachplatte mit einer benachbarten Solardachplatte ist bevorzugt ein zum ersten Profil komplementäres Profil vorgesehen, das einen über die Rückseite des Befestigungselements zurückgebogenen Abschnitt aufweist. Wenn nun dieser an der Rückseite der Solardachplatte ausgebildete Abschnitt des komplementären Profils zwischen den über den Randbereich des Photovoltaikmoduls gebogenen Abschnitt des ersten Profils und das Photovoltaikmodul eingreift, wird eine formschlüssige Verbindung geschaffen, wobei die Solardachplatten einander überlappen und Regenwasser abrinnen kann. Wenn das erste Profil am oberen Rand der Solardachplatte angeordnet ist, so ist das genannte komplementäre Profil am unteren Rand der Solardachplatte angeordnet, sodass zwei gleichartige Solardachplatten wie beschrieben miteinander formschlüssig verbunden werden können.

Bevorzugt weist das erste Profil zumindest in einem Bereich über der Anschlussdose eine Ausnehmung auf. Dies erleichtert den Zugang zur Anschlussdose und gestattet somit das einfache Kontaktieren einer Verbindungsleitung an der Anschlussdose. Gegebenenfalls gestattet die Ausnehmung auch die Fehlersuche beziehungsweise die Behebung von Kontaktproblemen an einer Anschlussdose, ohne die Solardachplatte zur Gänze abnehmen zu müssen.

Um einen Schutz der empfindlichen Randbereiche der Photovoltaikmodule zu gewährleisten, können ergänzend zum ersten Profil auch weitere Profile des Befestigungselements entsprechend ausgebildet sein. Vorzugsweise ist hierbei vorgesehen, dass die Profile an zumindest drei Seiten des quaderförmigen ausgebildeten Photovoltaikmoduls jeweils einen Randbereich des Photovoltaikmoduls überdecken. Insbesondere können die Profile am oberen Rand sowie am linken und am rechten Rand der Solardachplatte derart gebogen sein, dass sie einen Randstreifen des Photovoltaikmoduls überdecken.

Gemäß einer bevorzugten Ausführungsform der vorliegenden Erfindung weist ein zweites Profil einen über einen Randbereich des Photovoltaikmoduls gebogenen Abschnitt auf, der über dem Randbereich des Photovoltaikmoduls auf sich selbst zurückgebogen ist und im Endbereich unter Einhaltung eines Abstands hakenförmig zur Rückseite zurückgebogen ist. Das zweite Profil ist hierbei an einer nicht dem ersten Profil gegenüberliegenden Seite der erfindungsgemäßen Solardachplatte angeordnet und ist dazu ausgelegt, eine mechanische Verbindung in einer Richtung herzustellen, die von der Richtung der mechanischen Verbindung verschieden ist, die durch das erste Profil und durch das zu dem ersten Profil komplementäre Profil bereitgestellt wird. Um auch hier die Ränder des Photovoltaikmoduls zu schützen, ist das zweite Profil im Querschnitt gesehen über einen Randbereich des Photovoltaikmoduls gebogen und erst danach in einen Bereich außerhalb der Rands gezogen, wo durch das hakenförmige Zurückbiegen zur Rückseite ein Eingriffsbereich für das komplementäre Profil bereitgestellt wird. Bevorzugt ist das zweite Profil an einer rechten oder linken Seite der Solardachplatte angeordnet.

In diesem Fall umfasst ein zum zweiten Profil komplementäres Profil einen an der Vorderseite über einen Randbereich des Photovoltaikmoduls gebogenen Endabschnitt, wie dies einer bevorzugten Ausführungsform der vorliegenden Erfindung entspricht. Das zweite Profil und das entsprechende komplementäre Profil können an nebeneinanderliegenden erfindungsgemäßen Solardachplatten miteinander in Eingriff gebracht werden, wobei die Ränder der Photovoltaikmodule durch die Überdachungen geschützt werden.

Im Sinne des Schutzes vor Witterungseinflüssen zur Bereitstellung einer langlebigen erfindungsgemäßen Solardachplatte ist die vorliegende Erfindung bevorzugt dahingehend weitergebildet, dass die Anschlussdose plättchenartige Elektroden aufweist, die zum Kontaktieren der Querverbinder des Photovoltaikmoduls zwischen einer vorderen Abdeckschicht und einer rückseitigen Abdeckschicht von Solarzellen des Photovoltaikmoduls einlaminiert sind. Auf diese Weise sind die Elektroden dauerhaft vor Nässe geschützt, wobei durch das erfindungsgemäß über den Randbereich des Photovoltaikmoduls gezogene erste Profil die Stelle, an der die Elektroden einlaminiert sind, zusätzlich vor dem ungehinderten Zutritt von Regenwasser und Hagel geschützt sind. In einem entlang der Seitenfläche des Photovoltaikmoduls hochgezogenen Bereich des ersten Profils ist hierbei eine Aussparung vorgesehen, welche bei der Montage des Photovoltaikmoduls am Befestigungselement ein Hindurchtreten der Anschlussdose erlaubt. Im Bereich der Aussparung kann vorzugsweise eine Dichtungsmasse aufgebracht werden.

Das Einlaminieren der Elektroden erlaubt weiters eine überaus platzsparende Anordnung der Anschlussdose am Rand des Photovoltaikmoduls.

Gemäß einer bevorzugten Ausführungsform der vorliegenden Erfindung führt zu beiden Seiten der Anschlussdose je eine Verbindungsleitung weg, die mit einer Anschlussdose einer weiteren derartigen Solardachplatte in elektrische Verbindung bringbar ist. Die Verbindungsleitungen können beim Verlegen einer Vielzahl von erfindungsgemäßen Solardachplatten in den vom ersten Profil im Bereich der Anschlussdose gebildeten Aufnahmekanal aufgenommen und mit der Verbindungsleitung der jeweiligen benachbarten Solardachplatte verbunden werden.

Zum Zweck einer möglichst langen Haltbarkeit ist das Befestigungselement von einem Blech, bevorzugt Aluminiumblech, gebildet, wie dies einer bevorzugten Ausführungsform der vorliegenden Erfindung entspricht. Hierbei kann bevorzugt das Blech des Befestigungselements tiefgezogene Bereiche aufweisen, was der mechanischen Stabilität hinsichtlich der Verwindungssteifigkeit zuträglich ist.

Die Erfindung wird nachfolgend anhand eines in der Zeichnung dargestellten Ausführungsbeispiels näher erläutert. In dieser zeigen Figur 1 eine Draufsicht auf eine erfindungsgemäße Solardachplatte, Figur 2 ein erstes Profil mit entsprechend komplementärem Profil, Figur 3 ein zweites Profil mit entsprechend komplementärem Profil und Figur 4 die Anordnung und elektrische Verschaltung einer Mehrzahl von Solardachplatten.

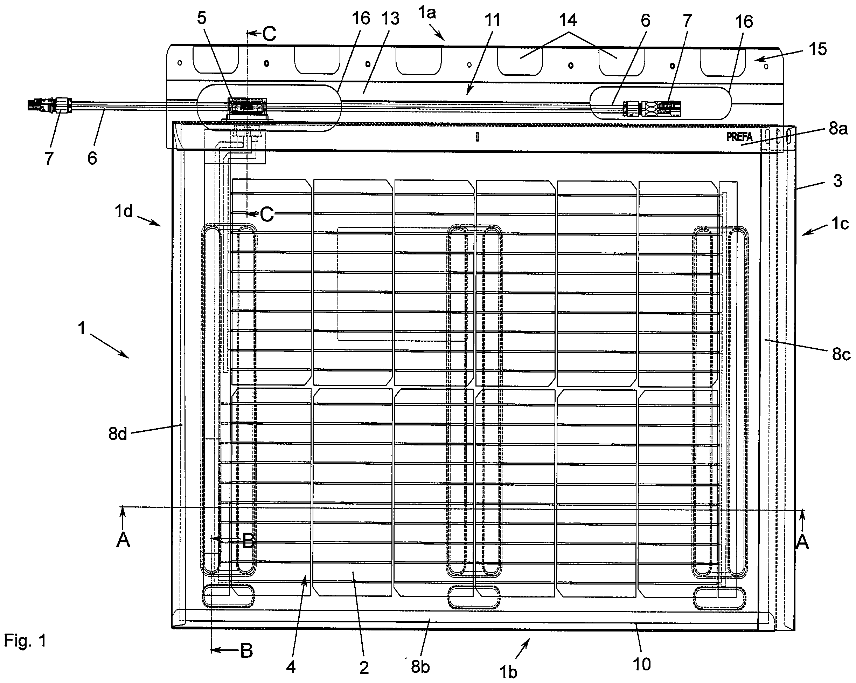

In Figur 1 ist eine erfindungsgemäße Solardachplatte mit dem Bezugszeichen 1 versehen. Die Solardachplatte 1 umfasst ein Photovoltaikmodul 2 sowie ein plattenartiges Befestigungselement 3, auf dem das Photovoltaikmodul 2 auf einer Vorderseite 4 beispielsweise durch Verkleben festgelegt ist. Eine Anschlussdose ist mit dem Bezugszeichen 5 bezeichnet und weist zu beiden Seiten Verbindungsleitungen 6 auf, die mittels eines Steckverbinders 7 jeweils mit einer Verbindungsleitung einer gleichartigen benachbarten Solardachplatte verbunden werden kann, um benachbarte Solardachplatten 1 in Serie zu schalten.

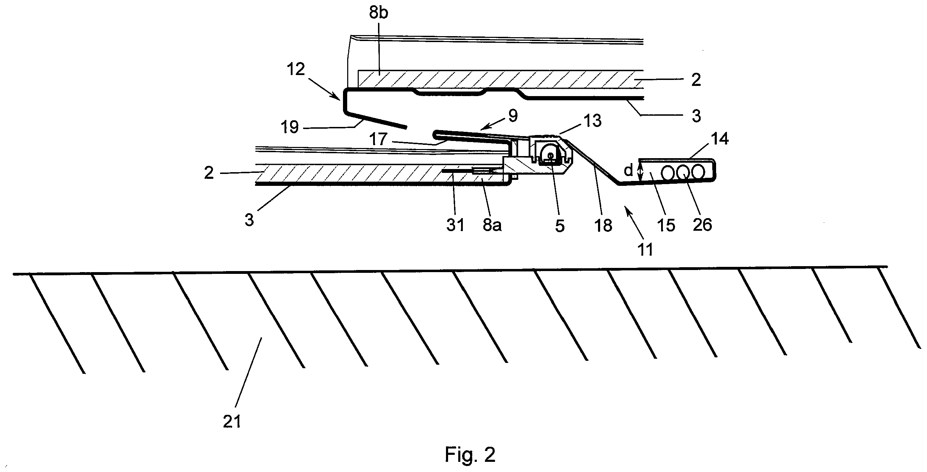

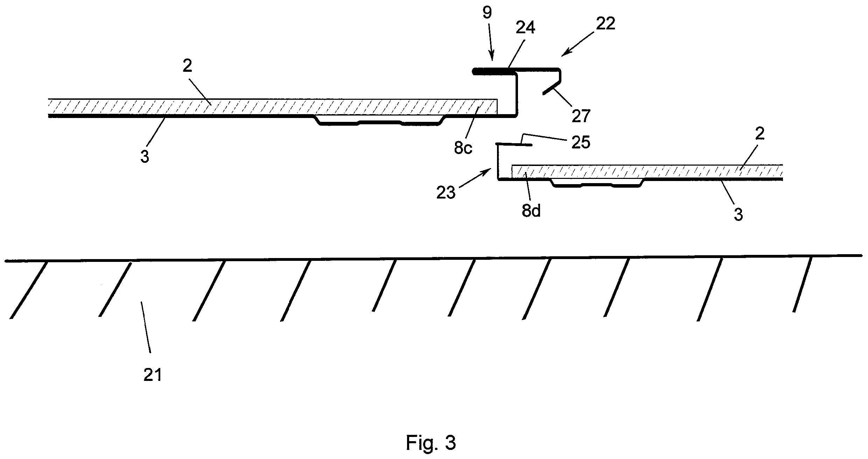

Das Befestigungselement 3 ist von einem Blech gebildet, das an allen vier Seiten der Solardachplatte 1, d.h. an der oberen Seite 1a, an der untere Seite 1b sowie an der rechten Seite 1c und der linken Seite 1d, durch Falzen des entsprechenden Randbereichs zu einem Profil geformt ist. Die Profile bilden hierbei komplementäre Verbindungsmittel aus, sodass die Verbindungsmittel nebeneinander angeordneter Solardachplatten formschlüssig miteinander in Eingriff bringbar sind (siehe Fig. 2 und 3).

Es ist bereits in Figur 1 zu erkennen, dass die Randbereiche 8a, 8c und 8d des Photovoltaikmoduls 2 an der oberen Seite 1a sowie an der rechten Seite 1c und an der linken Seite 1d der Solardachplatte 1 von Überdachungen 9 überdacht sind, die von den Profilen gebildet sind, wodurch diese Randbereiche 8a, 8c, 8d vor Witterungseinflüssen und mechanischen Beschädigungen geschützt sind. An der unteren Kante 10 des Photovoltaikmoduls 2 liegt der Randbereich 8b des Photovoltaikmoduls 2 frei, sodass Regenwasser abrinnen kann. Ein erstes Profil 11 an der oberen Seite 1a der Solardachplatte 1 umfasst einen die Anschlussdose 5 und die Verbindungsleitungen 6 überspannenden Bereich 13 sowie einen daran anschließenden Endabschnitt mit hakenförmig zur Vorderseite zurückgebogenen Zungen 14, die einen Kabelkanal 15 ausbilden. Im Bereich der Anschlussdose 5 und im Bereich des Steckverbinders 7 weist der überspannende Bereich 13 des ersten Profils 11 Durchbrechungen 16 auf, um einen Zugang zur Anschlussdose 5 bzw. dem Steckverbinder 7 zu ermöglichen.

Figur 2 zeigt das an der oberen Seite 1a der Solardachplatte 1 ausgebildete erste Profil 11 gemäß dem Schnitt C-C und das an der unteren Seite 1b einer benachbarten, gleichartigen Solardachplatte 1 ausgebildete komplementäre Profil 12 gemäß dem Schnitt B-B der Figur 1 in einer vergrößerten Darstellung. Es ist ersichtlich, dass das Profil 11 durch Falzen des über das Photovoltaikelement 2 vorstehenden Randbereichs des plattenartigen Befestigungselements 3 gebildet ist. Der Randbereich des plattenartigen Befestigungselements 3 ist aus seiner Plattenebene zunächst nach oben gebogen und umfasst dann einen über den Randbereich 8a des Photovoltaikmoduls 2 gebogenen Abschnitt 17, welcher die Überdachung 9 ausbildet, über dem Randbereich 8a auf sich selbst zurückgebogen ist und danach den überspannenden Bereich 13 ausbildet. Nach dem überspannenden Bereich 13 verläuft das erste Profil 11 in einem schräg abgewinkelten Bereich 18 zurück zur Plattenebene des plattenartigen Befestigungselements 3 und bildet nach einer weiteren Abwinkelung den Kabelkanal 15 aus, der durch den unter Einhaltung eines Abstands d hakenförmig zur Vorderseite 4 zurückgebogenen Endabschnitt 14 gebildet ist. Der Kabelkanal 15 kann eine Mehrzahl von Verbindungskabeln 26 aufnehmen.

Das komplementäre Profil 12 umfasst einen über die Rückseite des Befestigungselements 3 zurückgebogenen Abschnitt 19. Die benachbarten Solarplatten 1 können durch die zurückgebogenen Profilabschnitte miteinander ein Eingriff gebracht und an einer Dachkonstruktion 21 festgelegt werden. Insbesondere greift der zurückgebogene Abschnitt 19 im miteinander verbundenen Zustand der Solardachplatten 1 formschlüssig in den zwischen dem Abschnitt 17 des ersten Profils 11 und dem Photovoltaikmodul 2 gebildeten Spalt ein.

In Figur 2 sind weiters die plättchenartigen Elektroden 31 der Anschlussdose 5 ersichtlich, die bei der Herstellung des Photovoltaikmoduls 2 in dieses einlaminiert werden und dort Querverbinder der Solarzellen kontaktieren.

Die Figur 3 zeigt ein zweites Profil 22 und ein entsprechend komplementäres Profil 23 einer benachbarten Solardachplatte 1 gemäß dem Schnitt A-A der Figur 1. Das zweite Profil 22 ist bei der hier dargestellten Ausführungsform an der rechten Seite 1c der Solardachplatte 1 ausgebildet und das komplementäres Profil 23 ist an der linken Seite 1d der Solardachplatte 1 ausgebildet. Es kann aber auch die umgekehrte Anordnung gewählt werden, d.h. dass das zweite Profil 22 an der linken Seite 1d und das komplementäres Profil 23 ist an der rechten Seite 1c ausgebildet sein kann.

Das zweite Profil 22 weist einen über einen Randbereich 8c des Photovoltaikmoduls 2 gebogenen Abschnitt 24 auf, der über dem Randbereich 8c des Photovoltaikmoduls 2 auf sich selbst zurückgebogen ist und im Endbereich 27 unter Einhaltung eines Abstands hakenförmig zur Rückseite zurückgebogen ist. Auf diese Weise wird auch hier eine Überdachung 9 des Randbereichs 8c ausgebildet, sodass dieser vor Witterungseinflüssen wie beispielsweise Hagel und UV-Strahlung geschützt ist. Das zweite Profil 22 kann mit dem entsprechend komplementären Profil 23 durch Eingriff zur Herstellung einer festen mechanischen Verbindung in Wirkverbindung gebracht werden. Das Profil 23 umfasst hierzu einen über den Randbereich 8d des Photovoltaikmoduls 2 gebogenen Endabschnitt 25. Die Anordnung der beiden benachbarten erfindungsgemäßen Solardachplatten 1 kann an einer entsprechenden Dachkonstruktion 21 festgelegt werden.

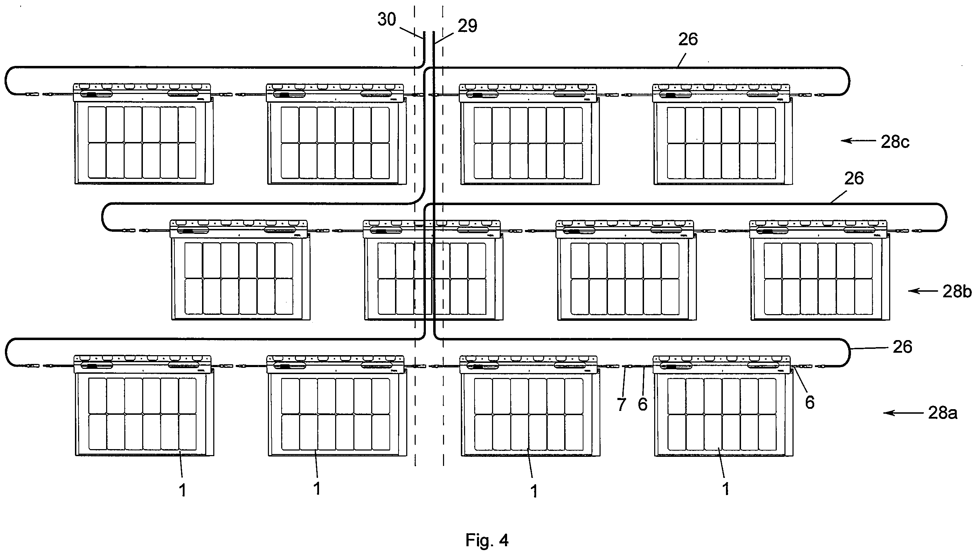

Figur 4 zeigt schematisch eine Mehrzahl von gleichartigen Solardachplatten 1 der in den Figuren 1 bis 3 beschriebenen Art. Die Solardachplatten 1 sind in mehreren Reihen 28a, 28b und 28c angeordnet und werden wie anhand der Figuren 1 bis 3 beschrieben durch formschlüssigen Eingriff der Profile innerhalb der Reihen und mit Solardachplatten 1 benachbarter Reihen verbunden. Die Solardachplatten 1 benachbarter Reihen sind hierbei versetzt zueinander angeordnet, wobei der Versatz im Wesentlichen der halben Breite einer Solardachplatte 1 entspricht. In Figur 4 sind die Solardachplatten 1 der Übersichtlichkeit halber im nicht verbundenen Zustand dargestellt.

Es ist ersichtlich, dass die Photovoltaikmodule 2 aller Solardachplatten 1 elektrisch in Reihe geschalten sind. Hierzu sind die Solardachplatten 1 innerhalb einer Reihe mittels der bereits beschriebenen Verbindungsleitungen 6 seriell verbunden. Die Verbindung von einer Reihe zur nächsten Reihe erfolgt mit Hilfe der Verbindungskabel 26, die wie bereits oben beschrieben innerhalb des Kabelkanals 15 der einzelnen Solardachplatten 1 aufgenommen sind. Auf diese Weise sind alle Solardachplatten zwischen dem Anschluss 29 und dem Anschluss 30 seriell miteinander verbunden.

## Patentansprüche

1. Solardachplatte (1) umfassend ein Photovoltaikmodul (2) mit einer Anschlussdose (5) für das Anschließen von elektrischen Leitern (6) an das Photovoltaikmodul (2) und ein plattenartiges Befestigungselement (3) für das Photovoltaikmodul (2), wobei das Photovoltaikmodul (2) flächig mit einer Vorderseite des Befestigungselements (3) verbunden ist, wobei das Befestigungselement (3) eine der Vorderseite (4) gegenüberliegende Rückseite aufweist und wobei das Befestigungselement (3) an seinen jeweils gegenüberliegenden Rändern durch Falzen aus dem Befestigungselement (3) gebildete Profile (11,12,22,23) aufweist, die komplementäre Verbindungsmittel ausbilden, sodass die Verbindungsmittel nebeneinander angeordneter Solardachplatten (1) formschlüssig miteinander in Eingriff bringbar sind, wobei ein erstes Profil (11) der genannten Profile einen die Anschlussdose (5) und/oder eine zwischen Anschlussdosen (5) zweier benachbarter Solardachplatten (1) verlaufende Verbindungsleitung (6) überspannenden Bereich (13) aufweist, **dadurch gekennzeichnet, dass** das erste Profil (11) im Anschluss an den überspannenden Bereich (13) einen unter Einhaltung eines Abstands (d) hakenförmig zur Vorderseite (4) zurückgebogenen Endabschnitt (14) aufweist.

2. Solardachplatte nach Anspruch 1, **dadurch gekennzeichnet, dass** das erste Profil (11) zur Ausbildung des Verbindungsmittels einen über einen Randbereich (8a) des Photovoltaikmoduls (2) gebogenen Abschnitt (17) aufweist, der über dem Randbereich (8a) des Photovoltaikmoduls (2) auf sich selbst zurückgebogen ist und danach zum überspannenden Bereich (13) hinreicht.

3. Solardachplatte nach Anspruch 1 oder 2, **dadurch gekennzeichnet, dass** das erste Profil (11) in dem hakenförmig zur Vorderseite zurückgebogenen Endabschnitt (14) eine Mehrzahl von Ausnehmungen zur Ausbildung einer Mehrzahl von freistehenden Zungen aufweist.

4. Solardachplatte nach einem der Ansprüche 1 bis 3, **dadurch gekennzeichnet, dass** ein zum ersten Profil (11) komplementäres Profil (12) vorgesehen ist, das einen über die Rückseite des Befestigungselements (3) zurückgebogenen Abschnitt (18) aufweist.

5. Solardachplatte nach einem der Ansprüche 1 bis 4, **dadurch gekennzeichnet, dass** das erste Profil (11) zumindest in einem Bereich über der Anschlussdose (5) eine Ausnehmung (16) aufweist.

6. Solardachplatte nach einem der Ansprüche 1 bis 5, **dadurch gekennzeichnet, dass** die Profile (11,22,23) an zumindest drei Seiten (1a, 1c, 1d) des quaderförmigen ausgebildeten Photovoltaikmoduls (2) jeweils einen Randbereich (8a,8c,8d) des Photovoltaikmoduls (2) überdecken.

7. Solardachplatte nach einem der Ansprüche 1 bis 6, **dadurch gekennzeichnet, dass** ein zweites Profil (22) einen über einen Randbereich (8c) des Photovoltaikmoduls (2) gebogenen Abschnitt (24) aufweist, der über dem Randbereich (8c) des Photovoltaikmoduls (2) auf sich selbst zurückgebogen ist und im Endbereich (27) unter Einhaltung eines Abstands hakenförmig zur Rückseite zurückgebogen ist.

8. Solardachplatte nach Anspruch 7, **dadurch gekennzeichnet, dass** ein zum zweiten Profil (22) komplementäres Profil (23) einen über einen Randbereich (8d) des Photovoltaikmoduls (2) gebogenen Endabschnitt (25) umfasst.

9. Solardachplatte nach einem der Ansprüche 1 bis 8, **dadurch gekennzeichnet, dass** die Anschlussdose (5) plättchenartige Elektroden (31) aufweist, die zum Kontaktieren der Querverbinder des Photovoltaikmoduls (2) zwischen einer vorderen Abdeckschicht und einer rückseitigen Abdeckschicht von Solarzellen des Photovoltaikmoduls (2) einlaminiert sind.

10. Solardachplatte nach einem der Ansprüche 1 bis 9, **dadurch gekennzeichnet, dass** das Befestigungselement (3) von einem Blech, bevorzugt Aluminiumblech, gebildet ist.

11. Solardachplatte nach Anspruch 10, **dadurch gekennzeichnet, dass** das Blech des Befestigungselements (3) tiefgezogene Bereiche aufweist.

## Claims

1. Solar roof panel (1) comprising a photovoltaic module (2) with a junction box (5) for connecting electrical conductors (6) to the photovoltaic module (2) and a plate-like fastening element (3) for the photovoltaic module (2), wherein the photovoltaic module (2) is flatly connected to a front side of the fastening element (3), wherein the fastening element (3) comprises a rear side opposite the front side (4) and wherein the fastening element (3) comprises profiles (11,12,22,23) formed by rebating at its respective opposite edges, which form complementary connecting means, so that the connecting means of adjacent solar roof panels (1) can be brought into interlocking engagement with each other, wherein a first profile (11) of the said profiles comprises a section (13) spanning the junction box (5) and/or a connecting line (6) running between the junction boxes (5) of two adjacent solar roof panels (1), **characterized in that** the first profile (11), following the spanning section (13), comprises an end section (14) bent back hook-like towards the front side (4) while maintaining a distance (d).

2. Solar roof panel according to claim 1, **characterized in that** the first profile (11) for forming the connecting means comprises a section (17) bent over an edge area (8a) of the photovoltaic module (2), which is bent back over the edge area (8a) of the photovoltaic module (2) onto itself and then extends towards the overspanning section (13).

3. Solar roof panel according to claim 1 or 2, **characterized in that** the first profile (11) in the hook-like bent back end section (14) comprises a plurality of recesses for forming a plurality of free-standing latches.

4. Solar roof panel according to any of claims 1 to 3, **characterized in that** a profile (12) complementary to the first profile (11) is provided, which comprises a section (18) bent back over the rear side of the fastening element (3).

5. Solar roof panel according to any of claims 1 to 4, **characterized in that** the first profile (11) comprises a recess (16) in at least one area above the junction box (5).

6. Solar roof panel according to any of claims 1 to 5, **characterized in that** the profiles (11,22,23) cover an edge area (8a,8c,8d) of the photovoltaic module (2) on at least three sides (la,lc,ld) of the cuboid-shaped photovoltaic module (2).

7. Solar roof panel according to any of claims 1 to 6, **characterized in that** a second profile (22) comprises a section (24) bent over an edge area (8c) of the photovoltaic module (2), which is bent back over the edge area (8c) of the photovoltaic module (2) onto itself and is bent back hook-like towards the rear side in the end section (27) while maintaining a distance.

8. Solar roof panel according to claim 7, **characterized in that** a profile (23) complementary to the second profile (22) comprises an end section (25) bent over an edge area (8d) of the photovoltaic module (2).

9. Solar roof panel according to any of claims 1 to 8, **characterized in that** the junction box (5) comprises plate-like electrodes (31) laminated between a front cover layer and a rear cover layer of solar cells of the photovoltaic module (2) for contacting the cross-connectors of the photovoltaic module (2).

10. Solar roof panel according to any of claims 1 to 9, **characterized in that** the fastening element (3) is formed from a sheet, preferably aluminium sheet.

11. Solar roof panel according to claim 10, **characterized in that** the sheet of the fastening element (3) comprises deep-drawn areas.

## Revendications

1. Panneau solaire de toiture (1) comprenant un module photovoltaïque (2) avec un boîtier de raccordement (5) pour le raccordement de conducteurs électriques (6) au module photovoltaïque (2) et un élément de fixation (3) en forme de plaque pour le module photovoltaïque (2), le module photovoltaïque (2) étant relié à plat à un côté avant de l'élément de fixation (3), l'élément de fixation (3) présentant un côté arrière opposé au côté avant (4) et l'élément de fixation (3) présentant des profilés (11, 12, 22, 23) formés sur ses bords opposés par pliage à partir de l'élément de fixation (3), qui forment des moyens de liaison complémentaires, de sorte que les moyens de liaison des panneaux solaires de toiture (1) disposés les uns à côté des autres peuvent être amenés en contact les uns avec les autres, un premier profilé (11) parmi lesdits profilés présentant une zone recouvrante (13) s'étendant sur le boîtier de raccordement (5) et/ou une ligne de liaison (6) s'étendant entre les boîtiers de raccordement (5) de deux panneaux solaires de toiture (1) adjacents, **caractérisé en ce que** le premier profilé (11) qui suit la zone recouvrante (13) présente une section d'extrémité (14) qui est repliée en forme de crochet vers le côté avant (4) tout en maintenant une distance (d).

2. Panneau solaire de toiture selon la revendication 1, **caractérisé en ce que** le premier profilé (11) destiné à former le moyen de liaison présente une section (17) qui est courbée sur une zone de bordure (8a) du module photovoltaïque (2), qui est repliée sur elle-même sur la zone de bordure (8a) du module photovoltaïque (2) et s'étend ensuite jusqu'à la zone recouvrante (13).

3. Panneau solaire de toiture selon la revendication 1 ou 2, **caractérisé en ce que** le premier profilé (11) présente une pluralité d'évidements dans la section d'extrémité (14) qui sont repliés en forme de crochet vers l'avant pour former une pluralité de languettes autoportantes.

4. Panneau solaire de toiture selon l'une des revendications 1 à 3, **caractérisé en ce qu'**il est prévu un profilé (12) complémentaire au premier profilé (11), qui présente une section (18) repliée sur l'arrière de l'élément de fixation (3).

5. Panneau solaire de toiture selon l'une des revendications 1 à 4, **caractérisé en ce que** le premier profilé (11) présente un évidement (16) au moins dans une zone située au-dessus du boîtier de raccordement (5).

6. Panneau solaire de toiture selon l'une des revendications 1 à 5, **caractérisé en ce que** les profilés (11, 22, 23) recouvrent chacun une zone de bordure (8a, 8c, 8d) du module photovoltaïque (2) sur au moins trois côtés (1a, 1c, 1d) du module photovoltaïque parallélépipédique (2).

7. Panneau solaire de toiture selon l'une des revendications 1 à 6, **caractérisé en ce qu'**un deuxième profilé (22) présente une section (24) recourbée sur une zone de bordure (8c) du module photovoltaïque (2), qui est repliée sur elle-même sur la zone de bordure (8c) du module photovoltaïque (2) et est repliée en forme de crochet vers l'arrière dans la zone d'extrémité (27), en respectant une certaine distance.

8. Panneau solaire de toiture selon la revendication 7, **caractérisé en ce qu'**un profilé (23) complémentaire du deuxième profilé (22) comprend une section d'extrémité (25) recourbée sur une zone de bordure (8d) du module photovoltaïque (2).

9. Panneau solaire de toiture selon l'une des revendications 1 à 8, **caractérisé en ce que** le boîtier de raccordement (5) présente des électrodes en forme de plaque (31) qui sont stratifiées entre une couche de couverture avant et une couche de couverture arrière de cellules solaires du module photovoltaïque (2) pour entrer en contact avec les connecteurs transversaux du module photovoltaïque (2).

10. Panneau solaire de toiture selon l'une des revendications 1 à 9, **caractérisé en ce que** l'élément de fixation (3) est formé d'une tôle, de préférence une tôle d'aluminium.

11. Panneau solaire de toiture selon la revendication 10, **caractérisé en ce que** la tôle de l'élément de fixation (3) présente des zones embouties.
